# EUROPEAN PATENT SPECIFICATION

(11) **EP 2 357 207 B1**
(45) Date of publication and mention of the grant of the patent: **07.11.2018**
(21) Application number: 09831598.9
(22) Date of filing: 01.09.2009
(51) Int. Cl.: C08G 18/38, C08K 5/51, C08L 75/04, G02B 1/04

(54) **POLYMERIC COMPOSITION FOR OPTICAL MATERIAL, OPTICAL MATERIAL, AND OPTICAL MATERIAL MANUFACTURING METHOD**
POLYMERE ZUSAMMENSETZUNG FÜR EIN OPTISCHES MATERIAL, OPTISCHES MATERIAL UND VERFAHREN ZUR HERSTELLUNG EINES OPTISCHEN MATERIALS
COMPOSITION POLYMÈRE POUR MATÉRIAU OPTIQUE, MATÉRIAU OPTIQUE ET PROCÉDÉ DE FABRICATION DE MATÉRIAU OPTIQUE

(30) Priority: 08.12.2008 JP 2008311983
(43) Date of publication of application: 17.08.2011
(73) Proprietor: Mitsui Chemicals, Inc., Tokyo 105-7117 (JP)
(72) Inventor: RYU, Akinori, Omuta-shi Fukuoka 836-8610 (JP); KOBAYASHI, Seiichi, Minato-ku Tokyo 105-7122 (JP)
(74) Representative: Wills, Andrew Jonathan
(86) International application number: PCT/JP2009/004279
(87) International publication number: WO 2010/067489

(56) References cited:
- JP-A- 2002 121 379
- JP-A- 2003 128 668
- JP-A- 2008 143 872
- JP-A- 2008 255 353
- JP-B- 45 033 438
- JP-T- 2004 500 447
- US-B1- 6 225 021

## Description

### TECHNICAL FIELD

The present invention relates to a polymerizable composition tor optical materials. More specifically, the present invention relates to a polymerizable composition for optical materials including an aromatic isocyanate, a specific polythiol compound and a specific phosphorus-containing compound. In addition, the present invention relates to an optical material obtained from the polymerizable composition for optical materials and a method for manufacturing the optical material.

### BACKGROUND ART

Conventionally, plastic materials have been used for optical components, instead of inorganic materials. The plastic materials are light-weight and are not readily cracked and can be dyed, as compared to inorganic materials which have been used to date. Therefore, the plastic materials are suitably used. In particular, plastic materials having a high refraction index are required as optical components such as lenses, and sulfur-containing urethane (thiourethane)-based resins described in Patent Documents 1 and 2 as plastic materials having a high refraction index are suggested.
[Patent Document 1] Japanese Laid-open patent publication No. H02-270859
[Patent Document 2] Chinese Laid-open patent publication No. 1405198
   Patent Document 3 describes polymerizable compositions comprising an isocyanate, such as m-XDI, a phosphine compound, such as triphenylphosphine, and a polymerizable monomer with labile protons, such as PETMP (pentaerythritol tetrakis(mercaptopropionate)).
[Patent Document 3] US 6225021 Patent Document D4 relates to optical urethane resins showing high total light transmittance and low yellowness.
[Patent Document 4] EP 0 506 315 A2

### DISCLOSURE OF THE INVENTION

In technologies of the related art, molded products made of a thiourethane-based resin have a high refraction index. However, since the molded products are colored, it is difficult to put into practical use in view of color. Recently, molded products have been previously colored with a coloring agent such as a bluing agent to shield coloring caused by a thiourethane-based resin. However, the coloration of molded products made of thiourethane-based resins cannot be inhibited.

The present inventors discovered that molded products which have high refraction index and are inhibited coloring can be obtained from a polymerizable composition containing an aromatic isocyanate, a specific polythiol compound and a specific phosphorus-containing compound and thus accomplished the present invention.

That is, the present invention will be described below.
(1) A polymerizable composition for optical materials including:
   (a) an aromatic isocyanate selected from tolylene diisocyanate, 4,4'-diphenylmethane diisocyanate, and phenylene diisocyanate;
   (b) a mercapto group-containing compound; and
   (c) a phosphorus-containing compound selected from triphenylphosphine, tris(1,3-dichloropropan-2-yl)phosphate, triphenyl phosphite, and triphenyl phosphate.
(2) The composition described in (1), wherein the mercapto group-containing compound (b) is a polythiol compound (b1) and/or a (poly)hydroxy(poly)mercapto compound (b2).
(3) The composition described in (2), wherein the polythiol compound (b1) is at least one selected from the group consisting of 4-mercaptomethyl-1,8-dimercapto-3,6-dithiaoctane, 4,8 or 4,7 or 5,7-dimercaptomethyl-1,11-dimercapto-3,6,9-trithia undecane, pentaerythritol tetrakismercaptoacetate, pentaerythritol tetrakismercaptopropionate, 2,5-bis(mercaptomethyl)-1,4-dithiane, bis(mercaptoethyl)sulfide, 1,1,3,3-tetrakis (mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane and 3-mercaptomethyl-1,5-dimercapto-2,4-dithiapentane.
(4) The composition described in (2) or (3), wherein the (poly) hydroxy (poly) mercapto compound (b2) is at least one selected from the group consisting of 2-mercapto ethanol, 3-mercapto-1,2-propanedithiol, 1,3-dimercapto-2-propanol, 2,3-dimercapto-1-propanol, 1,2-dimercapto-1,3-butanediol, pentaerythritol mono(3-mercaptopropionate), pentaerythritol bis(3-mercaptopropionate), pentaerythritol tris(3-mercaptopropionate), pentaerythritol tris(thioglycolate) and glycerine bis(mercaptoacetate), 4-mercaptophenol and 2,4-dimercaptophenol.
(5) The composition described in any one of (1) to (4), wherein the triphenylphosphine is contained in an amount of 1 × 10² ppm or more.
(6) The composition described in (1), wherein the triphenylphosphine is contained in an amount of 1×10² ppm to 5×10⁴ ppm.
(7) The composition described in (1), wherein at least one selected from the group consisting of tris(1,3-dichloropropan-2-yl)phosphate, triphenyl phosphate and triphenyl phosphate is contained in an amount of 1×10² ppm or more.
(8) A resin for optical materials obtained by polymerizing the polymerizable composition for optical materials according to any one of (1) to (7).
(9) An optical transparent member including the resin for optical materials described in (8).
(10) An optical material including the optical transparent member according to that described in (9).
(11) A method for manufacturing an optical material, including curing the polymerizable composition for optical materials described in any one of (1) to (7).
(12) The method described in (11), wherein the polymerizable composition for optical materials is molded by cast polymerization.

According to the present invention, a polymerizable composition for optical materials capable of obtaining an optical material having a high refraction index and inhibitory activity on coloring, and an optical material obtained from the polymerizable composition are provided.

### BEST MODE FOR CARRYING OUT THE INVENTION

Hereinafter, embodiments of the polymerizable composition for optical materials of the present invention will be described.

The polymerizable composition for optical materials according to present embodiment contains:
(a) an aromatic isocyanate;
(c) a phosphorus-containing compound selected from triphenylphosphine, tris(1,3-dichloropropan-2-yl)phosphate, triphenyl phosphite, and triphenyl phosphate.

The polymerizable composition for optical materials of the present invention comprises a phosphorus-containing compound (c) as a coloring inhibitor, thus providing an optical material with coloring inhibition, which has a high refraction index and is further caused by a thiourethane-based resin.

### <Aromatic isocyanate (a)>

The aromatic isocyanate (a) used for the present invention is tolylene diisocyanate, 4,4'-diphenylmethane diisocyanate or phenylene diisocyanate.

In addition, in addition to the aromatic isocyanate (a), the following other isocyanate compound may be used.

Examples of other isocyanate compound include, but are not limited to: aliphatic polyisocyanate compound such as hexamethylene diisocyanate, 2,2,4-trimethylhexamethylene diisocyanate, 2, 4,4-trimethylhexamethylene diisocyanate, lysine diisocyanato methyl ester, lysine triisocyanate, m-xylylene diisocyanate, á,á,á',á'-tetramethylxylylene diisocyanate, bis(isocyanatomethyl)naphthalene, mesitylene triisocyanate, bis(isocyanatomethyl)sulfide, bis(isocyanatoethyl)sulfide, bis(isocyanatomethyl)disulfide, bis(isocyanatoethyl)disulfide, bis(isocyanatomethylthio)methane, bis(isocyanatoethylthio)methane, bis(isocyanatoethylthio)ethane and bis(isocyanatomethylthio)ethane;
alicyclic polyisocyanate compound such as isophorone diisocyanate, bis(isocyanatomethyl)cyclohexane, dicyclohexylmethane diisocyanate, cyclohexane diisocyanate, methylcyclohexane diisocyanate, dicyclohexyl dimethyl methane isocyanate, 2,5-bis(isocyanatomethyl)bicycle-[2.2.1]-heptane, 2,6-bis(isocyanatomethyl)bicycle-[2.2.1]-heptane, 3,8-bis(isocyanatomethyl)tricyclodecane, 3,9-bis(isocyanatomethyl)tricyclodecane, 4,8-bis(isocyanatomethyl)tricyclodecane, 4,9-bis(isocyanatomethyl)tricyclodecane;
aromatic polyisocyanate compound such as diphenylsulfide-4,4-diisocyanate; and
heterocyclic polyisocyanate compound such as 2,5-diisocyanatothiophene, 2,5-bis(isocyanatomethyl)thiophene, 2,5-diisocyanatotetrahydrothiophene, 2,5-bis(isocyanatomethyl)tetrahydrothiophene, 3,4-bis(isocyanatomethyl)tetrahydrothiophene, 2,5-diisocyanato-1,4-dithiane, 2,5-bis(isocyanatomethyl)-1,4-dithiane, 4,5-diisocyanato-1,3-dithiolane, and 4,5-bis(isocyanatomethyl)-1,3-dithiolane.

In addition, examples of other isocyanate compound include, but are not limited to, exemplified isocyanate compound whose isocyanate groups are partially substituted by isothiocyanate groups.

Examples of the isothiocyanate compounds include, but are not limited to:
aliphatic polyisothiocyanate compounds such as hexamethylene diisothiocyanate, lysine diisothiocyanate methyl ester, lysine triisothiocyanate, m-xylylene diisothiocyanate, bis(isothiocyanatomethyl)sulfide, bis(isothiocyanatoethyl)sulfide and bis(isothiocyanatoethyl)disulfide;
alicyclic polyisothiocyanate compounds such as isophorone diisothiocyanate, bis(isothiocyanatomethyl)cyclohexane, dicyclohexylmethane diisothiocyanate, cyclohexane diisothiocyanate, methylcyclohexane diisothiocyanate, 2,5-bis(isothiocyanatomethyl)bicycle-[2.2.1]-heptane, 2,6-bis(isothiocyanatomethyl)bicycle-[2.2. 1]-heptane, 3,8-bis(isothiocyanatomethyl)tricyclodecane, 3,9-bis(isothiocyanatomethyl)tricyclodecane, 4,8-bis(isothiocyanatomethyl)tricyclodecane, and 4,9-bis(isothiocyanatomethyl)tricyclodecane;
aromatic polyisothiocyanate compound such as tolylene diisothiocyanate, 4,4-diphenylmethane diisothiocyanate, and diphenyldisulfide 4,4-diisothiocyanate; and
sulfur-containing heterocyclic polyisothiocyanate compound such as 2,5-diisothiocyanatothiophene, 2,5-bis(isothiocyanatomethyl)thiophene, 2,5-isothiocyanatotetrahydrothiophene, 2,5-bis(isothiocyanatomethyl)tetrahydrothiophene, 3,4-bis(isothiocyanatomethyl)tetrahydrothiophene, 2,5-diisothiocyanato-1,4-dithiane, 2,5-bis(isothiocyanatomethyl)-1,4-dithiane, 4,5-diisothiocyanato-1,3-dithiolane and 4,5-bis(isothiocyanatomethyl)-1,3-dithiolane.

Further, other isocyanate compound include halogen- substituted isocyanate compound such as chlorine-substituted and bromine-substituted isocyanate compound, and alkyl-substituted, alkoxy-substituted, nitro-substituted, polyalcohol-modified prepolymers of isocyanate compound, carbodiimide-modified isocyanate compound, urea-modified isocyanate compound, biuret-modified isocyanate compound and dimerized reaction products of these isocyanate compound. These isocyanate compound may be used alone or in combination of two or more thereof.

### <Mercapto group-containing compound (b)>

Examples of the mercapto group-containing compound (b) used in the present embodiment include "polythiol compound (b1)" having two or more mercapto groups and " (poly) hydroxy (poly) mercapto compound (b2)" having at least one hydroxy group and having at least one mercapto group. The mercapto group-containing compound (b) may be used alone or in combination of one or more thereof.

### (Polythiol compound (bl))

Examples of the polythiol compound (b1) used for present embodiment include 4-mercaptomethyl-1,8-dimercapto-3,6-dithiaoctane, 4,8 or 4,7 or 5,7-dimercaptomethyl-1,11-dimercapto-3,6,9-trithia undecane, pentaerythritol tetrakis mercapto acetate, pentaerythritol tetrakismercapto propionate, 2,5-bis(mercaptomethyl)-1,4-dithiane, bis(mercaptoethyl) sulfide, 1,1, 3,3-tetrakis (mercaptomethylthio)propane, 4, 6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, and 3-mercaptomethyl-1,5-dimercapto-2,4-dithiapentane. These polythiol compounds may be used alone or in combination of two or more thereof.

Further, the following other polythiol compound may be used and examples thereof include, but are not limited to, aliphatic polythiol compound such as methanedithiol, 1,2-ethanedithiol, 1,2,3-propanetrithiol, 1,2-cyclohexanedithiol, bis(2-mercaptoethyl)ether, tetrakis(mercaptomethyl)methane, diethylene glycol bis(2-mercaptoacetate), diethylene glycol bis(3-mercaptopropionate), ethylene glycol bis(2-mercaptoacetate), ethylene glycol bis(3-mercaptopropionate), trimethylolpropane tris(2-mercaptoacetate), trimethylolpropane tris(3-mercaptopropionate), trimethylolethane tris(2-mercaptoacetate), trimethylolethane tris(3-mercaptopropionate), bis(mercaptomethyl)sulfide, bis(mercaptomethyl)disulfide, bis(mercaptoethyl)disulfide, bis(mercaptopropyl)sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropylthio)ethane, 1,2,3-tris(mercaptomethylthio)propane, 1,2,3-tris(2-mercaptoethylthio)propane, 1,2,3-tris(3-mercaptopropylthio)propane, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl)sulfide, 2,5-dimercapto-1,4-dithiane, 2,5-dimercaptomethyl-2,5-dimethyl-1,4-dithiane, and esters of these thioglycolates and mercaptopropionates, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropionate), 2-mercaptoethyl ether bis(2-mercaptoacetate), 2-mercaptoethyl ether bis(3-mercaptopropionate), thiodiglycolic acid bis(2-mercaptoethylester), thiodipropionic acid bis(2-mercaptoethylester), dithiodiglycolic acid bis(2-mercaptoethylester), dithiodipropionic acid bis(2-mercaptoethylester), 1,1, 3, 3-tetrakis (mercaptomethylthio)propane, 1,1,2,2-tetrakis (mercaptomethylthio)ethane, 4,6-bis(mercaptomethylthio)-1,3-dithiacyclohexane, tris(mercaptomethylthio)methane, tris(mercaptoethylthio)methane;
aromatic polythiol compound such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,3,5-trimercaptobenzene, 1,3,5-tris(mercaptomethyl)benzene, 1,3,5-tris(mercaptomethyleneoxy)benzene, 1,3,5-tris(mercaptoethyleneoxy)benzene, 2,5-toluene dithiol, 3,4-toluene dithiol, 1,5-naphthalene dithiol, 2,6-naphthalene dithiol; and
heterocyclic polythiol compound such as 2-methylamino-4,6-dithiol-sym-triazine, 3,4-thiophenedithiol, bismuthiol, 4,6-bis(mercaptomethylthio)-1,3-dithiane, 2-(2,2-bis(mercaptomethylthio)ethyl)-1,3-dithietane.

In addition to the polythiol compound (b1), oligomers or halogen substituents such as chlorine substituents or bromine substituents of other polythiol compound may be used as other polythiol compound. These compounds may be used alone or in combination of two or more thereof.

### ((Poly)hydroxy(poly)mercapto compound (b2))

Examples of useful (poly)hydroxy(poly)mercapto compound (b2) include aliphatic compound such as 2-mercapto ethanol, 3-mercapto-1,2-propanedithiol, 1,3-dimercapto-2-propanol, 2,3-dimercapto-1-propanol, 1,2-dimercapto-1,3-butanediol;
(poly)hydroxy(poly)mercapto compound having an ester group such as pentaerythritol mono(3-mercaptopropionate), pentaerythritol bis(3-mercaptopropionate), pentaerythritol tris(3-mercaptopropionate), pentaerythritol tris(thioglycolate), and glycerine bis(mercaptoacetate);
(poly)hydroxy(poly)mercapto compound having aromatic rings such as 4-mercaptophenol or 2,4-dimercaptophenol; and
oligomers or halogen substituents such as chlorine substituents or bromine substituents of these compounds. The compound (b2) may be used alone or in combination of two or more thereof.

Further, aromatic isocyanate (a) used for present embodiment and optionally used other isocyanate compound (hereinafter, referred to as "isocyanate compounds") may be obtained by preparatorily reacting a part of the polythiol compound (b1), the (poly)hydroxy(poly)meicapto compound (b2) and optionally used other polythiol compound (hereinafter, referred to as "thiols"). In addition, thiols used for the present invention may be obtained by preparatorily reacting a part of the isocyanate compounds.

### <Phosphorus-containing compound (c)>

An example of the phosphorus-containing compound (c) is triphenylphosphine.

The triphenylphosphine is present in the polymerizable composition for optical materials in an amount of 1×10² ppm or more, preferably 1×10² ppm to 5×10⁴ ppm, more preferably 1×10² ppm to 3×10⁴ ppm, particularly preferably 3×10² ppm to 1×10⁴ ppm.

When the polymerizable composition for optical materials contains above-mentioned amount of triphenylphosphine, it maintains heat resistance, efficiently inhibits coloring caused by thiourethane-based resins and thus obtains an optical material with excellent color.

An example of the phosphorus-containing compound (c) is tris(1,3-dichloropropan-2-yl)phosphate.

The tris(1,3-dichloropropan-2-yl) phosphate is contained in the polymerizable composition for optical materials, in an amount of 1×10² ppm or more, preferably 1×10² ppm to 5×10⁴ ppm, more preferably 1×10² ppm to 3×10⁴ ppm, particularly preferably 3×10² ppm to 1×10⁴ ppm.

Examples of the phosphorus-containing compound (c) are triphenyl phosphite and triphenyl phosphate.

The triphenyl phosphite or triphenyl phosphate is contained in the polymerizable composition for optical materials, in an amount of 1×10² ppm or more, preferably 1×10² ppm to 5×10⁴ ppm, more preferably 1×10² ppm to 3×10⁴ ppm, particularly preferably 3×10² ppm to 1×10⁴ ppm.

When the polymerizable composition for optical materials contains the above-mentioned amount of at least one compound selected from the group consisting of tris (1, 3-dichloropropan-2-yl) phosphate, triphenyl phosphite and triphenyl phosphate, an optical material which can be prevented coloring caused by the thiourethane-based resins and exhibit excellent color can be obtained.

### <Polyhydroxy compound>

The polymerizable composition for optical materials according to the present embodiment may contain a polyhydroxy compound as a resin modifier. The polyhydroxy compound used for the present embodiment is a compound having two or more hydroxyl groups and having no mercapto group. The polyhydroxy compound is effective in modulating or improving physical properties such as index of refraction, Abbe number, heat resistance and specific gravity or mechanical properties such as impact resistance of thiourethane-based resins and is preferable in terms of reduction of manufacturing costs.

Examples of the polyhydroxy compound include ethylene glycol, 1,3-propanediol, 1,4-butanediol, 1,5-pentanediol, 1,6-hexanediol, diethylene glycol, propylene glycol, dipropylene glycol, triethylene glycol, butylene glycol, glycerin, trimethylolethane, trimethylol propane, pentaerythritol, sorbitol, erythritol, xylitol, mannitol, polycaprolactone diol, polyethylene glycol, bisphenol A, bisphenol F, bisphenol A-bis(2-hydroxyethylether), tetrabromine bisphenol A, tetrabromine phenol A-bis(2-hydroxyethylether), pyrogallol and the like. The polyhydroxy compound may be used alone or in combination of two or more thereof.

Further, as resin modifier other than the polyhydroxy compound, epoxy compound, episulfide compound, organic acids and anhydrides thereof and an olefin compound including (meth)acrylate compound may be added to modify the resin. The resin modifier refers to a compound which modulates or improves physical properties of thiourethane-based resins such as index of refraction, Abbe number, heat resistance, specific gravity or mechanical properties thereof such as impact resistance.

Examples of epoxy compound that may be added as the resin modifier include, but are not limited to:
phenol-based epoxy compound obtained by a condensation reaction of polyhydric phenol compound such as bisphenol A glycidyl ether with epihalohydrin compound;
alcohol-based epoxy compound obtained by condensation of polyhydric alcohol compound such as hydrogenated bisphenol A glycidyl ether with epihalohydrin compound;
glycidyl ester-based epoxy compound obtained by condensation of polyhydric organic acid compound such as 3,4-epoxycyclohexylmethyl-3',4'-epoxycyclohexane carboxylate with epihalohydrin compound;
amine-based epoxy compound obtained by condensation of primary and secondary diamine compound with epihalohydrin compound; and
aliphatic polyhydric epoxy compound such as vinyl cyclohexene diepoxide.

Examples of episulfide compound that can be added as the resin modifier include, but are not limited to:
2,3-epithiopropylthio compound which is a chain aliphatic such as bis(2,3-epithiopropylthio) sulfide, bis(2,3-epithiopropylthio)disulfide, bis(2,3-epithiopropylthio)methane, 1,2-bis(2,3-epithiopropylthio)ethane, 1,5-bis(2,3-epithiopropylthio)-3-thiapentane;
2,3-epithiopropylthio compound containing a cyclic aliphatic or a heterocyclic group such as 1,3-bis(2,3-epithiopropylthio)cyclohexane, 2,5-bis(2,3-epithiopropylthiomethyl)-1,4-dithiane; and
2,3-epithiopropylthio compound containing an aromatic group such as 1,3-bis(2,3-epithiopropylthio)benzene and 1,4-bis(2,3-epithiopropylthio)benzene.

Examples of the organic acid and anhydride thereof that can be added as the resin modifier include, but are not limited to, thiodiglycolic acid, thiodipropionic acid, dithiodipropionic acid, phthalic anhydride, hexahydrophthalic anhydride, methyl hexahydrophthalic anhydride, methyl tetrahydrophthalic anhydride, maleic anhydride, trimellitic anhydride and pyromellitic anhydride.

Examples of the olefin compound that can be added as the resin modifier include, but are not limited to:
(meth)acrylate compound such as benzyl acrylate, benzyl methacrylate, cyclohexyl acrylate, cyclohexyl methacrylate, 2-hydroxyethyl acrylate, 2-hydroxymethyl methacrylate, glycidyl acrylate, glycidyl methacrylate, phenoxy ethyl acrylate, phenoxy ethyl methacrylate, phenyl methacrylate, ethylene glycol diacrylate, ethylene glycol dimethacrylate, diethylene glycol diacrylate, diethylene glycol dimethacrylate, triethylene glycol diacrylate, triethylene glycol dimethacrylate, neopentyl glycol diacrylate, neopentyl glycol dimethacrylate, ethylene glycol bisglycidyl acrylate, ethylene glycol bisglycidyl methacrylate, bisphenol A diacrylate, bisphenol A dimethacrylate, bisphenol F diacrylate, bisphenol F dimethacrylate, trimethylol propane triacrylate, trimethylol propane trimethacrylate, glycerol diacrylate, glycerol dimethacrylate, pentaerythritol triacrylate, pentaerythritol tetraacrylate, pentaerythritol tetramethacrylate, xylylene dithioldiacrylate, xylylene dithiol dimethacrylate, mercapto ethyl sulfide diacrylate, and mercapto ethyl sulfide dimethacrylate;
allyl compound such as allyl glycidyl ether, diallylphthalate, diallylterephthalate, diallyl isophthalate and diethylene glycol bisallyl carbonate; and
vinyl compound such as styrene, chlorostyrene, methylstyrene, bromostyrene, dibromostyrene, divinyl benzene and 3,9-divinyl spiro(m-dioxane).

These resin modifiers may be used alone or in combination of two or more thereof.

For the use ratio of isocyanate compounds, thiols, phosphorus-containing compound and polyhydroxy compound (hereinafter, referred to as an "active hydrogen compounds") used in the present invention, a functional group molar ratio of (NCO+NCS)/(SH+OH) is generally within a range from 0.8 to 1.5, preferably, a range from 0.9 to 1.2.

In addition, the polymerizable composition described in the present invention may optionally contain a bluing agent. The bluing agent has an absorption band in the wavelength range from an orange region to a yellow region in a visible ray region, and has a function to adjust the color of an optical material comprised of the resin. The bluing agent further specifically contains a material exhibiting a blue color to a violet color.

The bluing agent used in the polymerizable composition of the present invention is not particularly limited, but specific examples thereof include a dye, a fluorescent whitening agent, a fluorescent pigment, an inorganic pigment, and the like. The bluing agent should be appropriately selected according to the physical properties or the resin color, or the like which is required for an optical component, . These bluing agents may be used alone or in combination of two or more kinds thereof.

Among these bluing agents, a dye is preferred from the viewpoint of the solubility in the polymerizable composition and the transparency of the obtained optical material. Among the dyes, a dye containing at least one kind selected from blue and violet dyes are preferred, but a mixture of dyes having other colors may be used as occasion may demand. For example, in addition to the blue and violet dyes, a gray, brown, red, or orange dye can also be used. Specific examples of a combination of such bluing agents include a combination of a blue dye and a red dye, a combination of a violet dye and a red dye, and others.

From the viewpoint of absorption wavelength, a dye having a maximum absorption wavelength of 520 nm to 600 nm is preferred, and a dye having a maximum absorption wavelength of 540 nm to 580 nm is more preferred.

From the viewpoint of the structure of the compound, an anthraquinone dye is preferred.

Specific examples of the dye include "PS Blue RR", "PS Violet RC", "PET Blue 2000", "PS Brilliant Red HEY", and "MLP RED V-1'' (each of which is a product name of Dystar Japan Ltd.), "Plast Blue 8514", and "Plast Red 8380" (each of which is a product name of Arimoto Chemical Co., Ltd.), and the like.

The used amount of the blue colorant is determined by the kind of the monomer, the presence or absence of the use of various additives, the kind or amount of the used additive, the polymerization method, or the polymerization condition. It is generally used in a ratio equal to or more than 0.001 ppm and equal to or less than 500 ppm, preferably in a ratio equal to or more than 0.005 ppm and equal to or less than 100 ppm, and more preferably in a ratio equal to or more than 0.01 ppm and equal to or Less than 10 ppm, based on the total amount of the monomers used, that is, the total weight of the polymerizable compound contained in the polymerization composition. Tf the amount of the bluing agent added is too high, the optical component entirely expresses a blue color too much, which is thus unfavorable in some cases, whereas if the amount is too low, the effect of improvement in the color is not sufficiently exhibited, which is thus unfavorable, in some cases.

The method for adding a bluing agent is not particularly limited, but a method in which a bluing agent is preliminarily added to monomers is preferred. As such a method, various methods such as a method for dissolving in a monomer, a method for preparing a master solution containing a high concentration of a bluing agent, diluting the master solution with the monomers or other additives used and adding diluted the master solution.
Other methods can be employed.

The composition containing the aromatic isocyanate (a), mercapto group-containing compound (b) and phosphorus-containing compound (c) as essential components as described above has such viscosity as to not interfere with the handleability. As used herein, the viscosity can be evaluated, for example, as a viscosity of a monomer mixture at a temperature of 20°C as measured with a B type viscometer. In the present invention, viscosities ranging from immediately after the composition are prepared to when all of the monomers are completely injected after performing a defoaming treatment under reduced pressure and other steps are important. From the viewpoint of good handleability, for example, the viscosity immediately after preparing of the composition is 100 mPa·s or less, preferably 50 mPa·s or less, and more preferably 30 mPa·s or less. Further, in the case where an optical material is molded by the cast polymerization as described below, the viscosity upon injection, as a value measured at a temperature of 20°C upon injection, is preferably 200 mPa·s or less, and particularly, in order to prepare a lens having a very small thickness in the center, an even lower viscosity, for example, a viscosity of 100 mPa·s or less is more preferable.

Further, the present invention provides an optical material obtained by curing the polymerizable composition for the optical material as described above.

Such an optical material has inhibited coloration, and is improved color. As used herein, the color can be evaluated as a measured value of yellow index (hereinafter referred to as "YI").

The refractive index of the optical material can be appropriately controlled by the kind and compositional ratio of the isocyanate compounds and active hydrogen compounds in the polymerizable composition. Particularly, the optical material of the embodiment requires a high refractive index. From such a viewpoint, it is desirable that the combination of isocyanate compounds and active hydrogen compounds are used in specific ratio to obtain a resin having a refractive index measured with an e-line is commonly 1.55 or more, preferably 1.59 or more, and more preferably 1.65 or more.

Further, from other viewpoints, a method for preparing the optical material including curing the polymerizable composition, for example, a method for preparing the optical material, including molding the polymerizable composition by cast polymerization using a lens-casting mold is provided.

When a mixture of the isocyanate compounds and the active hydrogen compounds, which is the polymerizable composition for an optical material as described above, is cured and molded, if necessary, in the same manner of the known molding methods, substances including catalysts such as dibutyltin dichloride and dimethyltin dichloride, internal mold release agents such as an acidic phosphoric ester, light stabilizers, antioxidants, reaction initiators such as radical reaction initiators, chain extenders, crosslinking agents, coloration inhibitors, oil-soluble dyes, fillers, an ultraviolet absorbent and the like, may be added.

Benzotriazoles may be used as ultraviolet absorbents and for example, the benzotriazole may be at least one selected from the group consisting of 2-[2-hydroxy-3-(dimethylbenzyl)-5-(1,1,3,3-tetramethylbutyl)phenyl] -2H-benzotriazole, isooctyl-3-(3-(2H-benzotriazol-2-yl)-5-t-butyl-4-hydroxyphenyl) prop ionate, 2-(3,5-di-t-butyl-2-hydroxyphenyl)benzotriazole, 2-(3,5-di-t-pentyl-2-hydroxyphenyl)benzotriazole, 2-[2-hydroxy-3,5-bis(dimethylbenzyl)phenyl]-2H-benzotriazole, 2-(3,5-di-t-butyl-2-hydroxyphenyl)-5-chlorobenzotriazole, 2-(2-hydroxy-5-t-octylphenyl)benzotriazole, and 2-(4-octyloxy-2-hydroxyphenyl)benzotriazole.

The type and added amount of ultraviolet absorbent in the present invention may be determined depending on the desired ultraviolet cutoff rate, and is preferably 0.03% by mass to 1.5% by mass, more preferably 0.05% by mass to 0.5% by mass, with respect to the polymerizable composition in terms of more desired results.

In the case where an injection solution is prepared by adding a reaction catalyst, a release agent or other additives to the isocyanate compounds and the active hydrogen compounds, the addition of the catalyst, the release agent or other additives depends on the solubility in the isocyanate compounds and the active hydrogen compounds. These agents may be preliminarily added to the isocyanate compounds and dissolved therein, or added to the active hydrogen compounds and dissolved therein, or added to a mixture of the isocyanate compounds and the active hydrogen compounds and dissolved therein. Alternatively, these agents may also be dissolved in a part of the isocyanate compounds or active hydrogen compounds used to prepare a master solution and the master solution may be then added thereto. The addition order is not limited to the orders in the exemplified methods, and should be appropriately selected on the basis of operability, safety, convenience, and the like.

The mixing is commonly carried out at a temperature of 30°C or less. From the viewpoint of the pot life of the mixture, a low temperature may be preferable in some cases. Further, in the case where additives such as the catalyst or the release agent do not exhibit good solubility in the isocyanate compounds and the active hydrogen compounds, they may be preliminarily warmed, and then dissolved in the isocyanate compounds, the active hydrogen compounds or a mixture thereof in some cases.

Moreover, it may be preferable in many cases to carry out a defoaming treatment under reduced pressure, a filtration treatment under pressurization or reduced pressure, or the like, if necessary, according to the physical properties required for the plastic lens to be obtained.

Subsequently, a lens-casting mold in which a polarization film is fixed, into which a mixture of the isocyanate compounds and the active hydrogen compounds has been injected, is heated in an apparatus for heating, such as in an oven or in water, at a predetermined temperature program for several hours to several ten hours to cure and mold the mixture.

The temperature for the polymerization curing is determined by the composition of a mixture, the kind of a catalyst, the shape of a mold, or the like and cannot be thus limited. The polymerization curing is carried out at a temperature of approximately -50 to 200°C over 1 to 100 hours.

Usually, the polymerization curing is generally initiated at a temperature in the range of 5°C to 40°C, then slowly elevated to a range of 80°C to 130°C, and heated at the same temperature for 1 hour to 4 hours.

After completion of the curing molding, by taking it out from the lens-casting mold, a plastic lens can be obtained.

It is desirable that the plastic lens obtained from the optical material of the present embodiment are subjected to an annealing treatment by heating the released lens to prevent the strain caused by the polymerization. The annealing temperature is usually in the range of 80 to 150°C, preferably in the range of 100 to 130°C, and more preferably in the range of 110 to 130°C. The annealing time is usually in the range of 0.5 to 5 hours, and preferably in the range of 1 to 4 hours.

The plastic lens obtained from the optical material of the present embodiment, is used, if necessary, to form a coating layer on one side or both sides. Examples of the coating layer include a primer layer, a hard coat layer, an anti-reflective film layer, an anti-fogging coat layer, an anti-pollution layer, a water-repellent layer, and the like. These coating layers may be used as single, or a multi-layer having a plurality of coating layers may be used. If the coating layer is formed on both sides, the same coating layers or different coating layers may be formed on each side.

In these coating layers, a UV absorber for protecting the lens or the eyes from ultraviolet rays, such as those used for the polymerizable composition for optical materials, an infrared absorber for protecting the eyes from infrared rays, a light stabilizer or antioxidant for improving the weather resistance of the lens, a dye or pigment for enhancing the fashionability of the lens, a photochromic dye or photochromic pigment, an antistatic agent, and in addition, known additives for enhancing the performance of the lens may be used in combination. Various leveling agents for improving the coating properties may be used.

The primer layer is generally formed between the lens base material (one kind of the optical material obtained from the polymerizable composition of the present embodiment) and the hard coat layer, in order to improve the adhesion to the hard coat layer and the impact resistance of the plastic lenses, and generally has a thickness of about 0.1 to 10 µm.

The primer layer is formed, for example, by an applying method or a dry method. In the applying method, a primer layer is formed by applying the primer composition by a known applying method such as spin coat method and a dip coat method, and then the primer lens is formed by solidifying the coating layer. In the dry method, a known dry method such as a CVD method or a vacuum deposition method is used to form a layer. When forming the primer layer, a pretreatment such as an alkali treatment, a plasma treatment or a UV treatment may be carried out on the surface of the lens, if necessary, in order to improve the adhesion.

As the primer composition, the solidified primer layer thereof preferably has high adhesion to the lens base material (one kind of the optical material obtained from the polymerizable composition of the embodiment), and usually a primer composition containing a urethane-based resin, an epoxy-based resin, a polyester-based resin, a melanin-based resin, or a polyvinyl acetal as a main component, and the like, is used. The primer composition can be used without a solvent, but a suitable solvent not having an effect on the lens for the purpose of controlling the viscosity of the composition, or other purposes may be used.

The hard coat layer is a coating layer designed so as to impart functions such as abrasion resistance, wear resistance, moisture resistance, hot water resistance, heat resistance, or weather resistance to the lens surface and usually has a thickness of about 0.3 to 30 µm.

The hard coat layer is usually formed by applying the hard coat composition by a known coating method such as spin coating, dip coating, and then curing. Examples of the curing method include curing methods by thermal curing or irradiation of energy rays such as ultraviolet rays and visible light. When forming the hard coat layer, pre-treatment such as alkali treatment or plasma treatment may be carried out on the coated surface (the lens base material or the primer layer), if necessary, in order to improve the adhesion.

As the hard coat composition, generally, a mixture of an organosilicon compound having curability and oxide fine particles (including composite oxide fine particles) comprising a metal Oxide such as Si, Al, Sn, Sb, Ta, Ce, La, Fe, Zn, W, Zr, In, Ti is used in many cases. Moreover, in addition to these, amines, amino acids, metal acetylacetonate complexes, metal salts of organic acids, perchloric acids, salts of perchloric acids, acids, metal chlorides, polyfunctional epoxy compound, or the like may be used. The hard coat composition may be used without a solvent, but a suitable solvent not having an effect on the lens may be used.

The anti-reflective layer is usually formed on the hard coat layer, if necessary. Examples of the anti-reflective layer include organic and inorganic ones. In the case of the inorganic ones, they are generally formed in many cases by a dry method such as a vacuum deposition method, a sputtering method, an ion plating method, an ion beam assisting method, a CVD method, using inorganic oxides such as SiO₂, TiO₂, and the like. In the case of the organic ones, they are generally formed in many cases by a wet method using a composition containing an organosilicon compound and silica-based fine particles having an internal cavity.

The anti-reflective layer may be a monolayer or a multilayer. In the case of a monolayer, it is preferable that its refractive index is lower than the refractive index of the hard coat layer by at least 0.1 or more. In order to effectively exhibit an anti-reflective function, it is preferably a multilayered anti-reflective film, and in this case, a low refractive index film and a high refractive index film are generally alternately stacked. In this case, it is also preferable that the difference between the refractive indices of the low refractive index film and the high refractive index film is 0.1 or more. Examples of the high refractive index film include films of ZnO, TiO₂, CeO₂, Sb₂O₅, SnO₂, ZrO₂, Ta₂O₅, and the like, and examples of the low refractive index film include a SiO₂ film, and the like. The film thickness is usually from about 50 to 150 nm.

Moreover, the plastic lens containing the optical material of the present embodiment may be subjected to backside polishing, antistatic treatment, dyeing treatment, dimming treatment, or the like, if necessary.

This plastic lens can be made to be thinner, and thus, it is useful as a spectacle lens, particularly as a lens for vision correction.

### [Example]

Hereinafter, the present invention will be described in more detail with reference to Examples, but the present invention is not limited to these. The lens obtained by polymerization was evaluated through a performance test. The performance test was carried out for index of refraction, Abbe number, heat resistance and strength by the following test method.
- Color: a resin plate with a thickness of 9 mm was manufactured and yellow index (YI) value thereof was measured using a colorimeter (CR-200: trade name, manufactured by Minolta Co., Ltd.).
- Refractive index (ne) and Abbe number (ve) : measured at 20°C using a Pulfrich refractometer (KPR-30: trade name, manufactured by Shimadzu Corporation).
- Heat resistance: evaluated by Tg measured by a TMA penetration method (50 g load, 0.5 mmϕ pin tip) using TMA-60 manufactured by Shimadzu Corporation.
- Specific gravity: measured by Archimedes' principle at 20°C.

### [Example 1]

34.65 g of tolylene diisocyanate and 14.34 g of hexamethylene diisocyanate were mixed and dissolved, 0.0075 g of dimethyltin dichloride as a curing catalyst, 0.05 g of Viosorb 583 as an ultraviolet absorbent, and 0.05 g of Zelec UN (acid phosphate ester) as an internal mold release agent were added thereto, followed by mixing and dissolving at 20°C. Further, 0.01 g of triphenylphosphine (hereinafter, TPPN) was added to the mixed solution, followed by mixing and dissolving at 20°C. After the dissolution, 51.01 g of 4-mercaptomethyl-1,8-dimercapto-3,6-dithiaoctane was added thereto, mixed and dissolved to make the mixed solution homogeneous. The homogeneous solution was defoamed at 600 Pa for one hour, filtered through a 1 µm TEFLON filter (TEFLON: registered trademark) and injected into a mold consisting of a glass mold and a tape, the mold was placed in an oven and the temperature was slowly elevated from 25°C to 120°C over 24 hours to perform polymerization. After completion of the polymerization, the mold was taken out from the oven and a molded product was released from the mold. The molded product was annealed at 120°C for 4 hours. The molded product thus obtained had a YI value of 9.0, an index of refraction (ne) of 1.669, an Abbe number (ve) of 28, a heat resistance of 111°C and a resin specific gravity of 1.35.

### [Example 2]

30.68 g of tolylene diisocyanate and 15.95 g of hexamethylene diisocyanate were mixed and dissolved, 0.005 g of dimethyltin dichloride as a curing catalyst, 0.05 g of Viosorb 583 as an ultraviolet absorbent, and 0.05 g of Zelec UN (acid phosphate ester) as an internal mold release agent were added thereto, followed by mixing and dissolving at 20°C. Further, 0.01 g of TPPN was added to the mixed solution, followed by mixing and dissolving at 20°C. After the dissolution, 53.37 g of 4,8 or 4,7 or 5,7-dimercaptomethyl-1,11-dimercapto-3,6,9-trithia undecane was added thereto, mixed and dissolved to make the mixed solution homogeneous. The homogeneous solution was defoamed at 600 Pa for one hour, filtered through a 1 µm TEFLON filter (TEFLON: registered trademark) and injected into a mold consisting of a glass mold and a tape, the mold was placed in an oven and the temperature was slowly elevated from 25°C to 120°C over 24 hours to perform polymerization. After completion of the polymerization, the mold was taken out from the oven and a molded product was released from the mold. The molded product was annealed at 120°C for 4 hours. The molded product thus obtained had a YI value of 8.7, an index of refraction (ne) of 1.669, an Abbe number (ve) of 28, a heat resistance of 121°C and a resin specific gravity of 1.36.

### [Example 3]

0.005 g of dimethyltin dichloride as a curing catalyst, 0.05 g of Viosorb 583 as an ultraviolet absorbent and 0.05 g of Zelec UN (registered trademark, acid phosphate ester, manufactured by Stepan Chemical. Co.) as an internal mold release agent were added to 44.45 g of tolylene diisocyanate, followed by mixing and dissolving at 20°C. Further, 0.50 g of TPPN was added to the mixed solution, followed by mixing and dissolving at 20°C. After the dissolution, 22.91 g of pentaerythritol tetrakismercaptopropionate and 32.64 g of 4,8 or 4,7 or 5,7-dimercaptomethyl-1,11-dimercapto-3,6,9-trithia undecane were added to the mixed solution and dissolved to make the mixed solution homogeneous. The homogeneous solution was defoamed at 600 Pa for one hour, filtered through a 1 µm TEFLON filter (TEFLON: registered trademark) and injected into a mold consisting of a glass mold and a tape, the mold was placed in an oven and the temperature was slowly elevated from 25°C to 120°C over 24 hours to perform polymerization. After completion of the polymerization, the mold was taken out from the oven and a molded product was released from the mold. The molded product was annealed at 120°C for 4 hours. The molded product thus obtained had a YI value of 5.1, an index of refraction (ne) of 1.660, an Abbe number (ve) of 27, a heat resistance of 136°C and a resin specific gravity of 1.38.

### [Example 4]

40.56 g of diphenylmethane diisocyanate and 14.68 g of hexamethylene diisocyanate were mixed and dissolved, 0.0075 g of dimethyltin dichloride as a curing catalyst, 0.05 g of Viosorb 583 as an ultraviolet absorbent, and 0.05 g of Zelec UN (acid phosphate ester) as an internal mold release agent were added thereto, followed by mixing and dissolving at 20°C. Further, 0.50 g of TPPN was added to the mixed solution, followed by mixing and dissolving at 20°C. After the dissolution, 44.76 g of 4-mercaptomethyl-1,8-dimercapto-3,6-dithiaoctane was added thereto, mixed and dissolved to make the mixed solution homogeneous. The homogeneous solution was defoamed at 600 Pa for one hour, filtered through a 1 µm TEFLON filter (TEFLON: registered trademark) and injected into a mold consisting of a glass mold and a tape, the mold was placed in an oven and the temperature was slowly elevated from 25°C to 120°C over 24 hours to perform polymerization. After completion of the polymerization, the mold was taken out from the oven and a molded product was released from the mold. The molded product was annealed at 120°C for 4 hours. The molded product thus obtained had a YI value of 4.8, an index of refraction (ne) of 1.674, an Abbe number (ve) of 26, a heat resistance of 111°C and a specific gravity of 1.33.

### [Example 5]

36.24 g of diphenylmethane diisocyanate and 16.24 g of hexamethylene diisocyanate were mixed and dissolved, 0.0050 g of dimethyltin dichloride as a curing catalyst, 0.05 g of Viosorb 583 as an ultraviolet absorbent, and 0.05 g of Zelec UN (acid phosphate ester) as an internal mold release agent were added thereto, followed by mixing and dissolving at 20°C. Further, 0.50 g of TPPN was added to the mixed solution, followed by mixing and dissolving at 20°C. After the dissolution, 47.52 g of 4,8 or 4,7 or 5,7-dimercaptomethyl-1,11-dimercapto-3,6,9-trithia undecane was added thereto, mixed and dissolved to make the mixed solution homogeneous. The homogeneous solution was defoamed at 600 Pa for one hour, filtered through a 1 µm TEFLON filter (TEFLON: registered trademark) and injected into a mold consisting of a glass mold and a tape, the mold was placed in an oven and the temperature was slowly elevated from 25°C to 120°C over 24 hours to perform polymerization. After completion of the polymerization, the mold was taken out from the oven and a molded product was released from the mold. The molded product was annealed at 120°C for 4 hours. The molded product thus obtained had a YI value of 5.1, an index of refraction (ne) of 1.672, an Abbe number (ve) of 27, a heat resistance of 122°C and a specific gravity of 1.33.

### [Example 6]

The mixing, polymerization and annealing were performed in the same manner as in Example 1, except that the amount of TPPN used was 1 g. The resin thus obtained had a YI value of 4.8, an index of refraction (ne) of 1.670, an Abbe number (ve) of 28, heat resistance of 111°C and a resin specific gravity of 1.35.

### [Example 7]

The mixing, polymerization and annealing were performed in the same manner as in Example 2, except that the amount of TPPN used was 1 g. The resin thus obtained had a YI value of 5.3, an index of refraction (ne) of 1.668, an Abbe number (ve) of 29, heat resistance of 119°C and a resin specific gravity of 1.36.

### [Example 8]

The mixing, polymerization and annealing were performed in the same manner as in Example 1, except that the amount of TPPN used was 2 g. The resin thus obtained had a YI value of 4.8, an index of refraction (ne) of 1.668, an Abbe number (ve) of 28, heat resistance of 109°C and a resin specific gravity of 1.35.

### [Example 9]

The mixing, polymerization and annealing were performed in the same manner as in Example 2, except that the amount of TPPN used was 2 g. The resin thus obtained had a YI value of 5.0, an index of refraction (ne) of 1.669, an Abbe number (ve) of 28, heat resistance of 120°C and a resin specific gravity of 1.35.

### [Example 10]

The mixing, polymerization and annealing were performed in the same manner as in Example 1, except that the amount of TPPN used was 5 g. The resin thus obtained had a YI value of 5.4, an index of refraction (ne) of 1.669, an Abbe number (ve) of 27, heat resistance of 107°C and a resin specific gravity of 1.34.

### [Example 11]

The mixing, polymerization and annealing were performed in the same manner as in Example 2, except that the amount of TPPN used was 5 g. The resin thus obtained had a YI value of 6.0, an index of refraction (ne) of 1.670, an Abbe number (ve) of 28, heat resistance of 117°C and a resin specific gravity of 1.35.

### [Example 12]

The mixing, polymerization and annealing were performed in the same manner as in Example 1, except that 0.03 g of tris(1,3-dichloropropan-2-yl)phosphate (hereinafter, PTDCP) was used instead of TPPN. The resin thus obtained had a YI value of 11.5, an index of refraction (ne) of 1.668, an Abbe number (ve) of 28, heat resistance of 109°C and a resin specific gravity of 1.35.

### [Example 13]

The mixing, polymerization and annealing were performed in the same manner as in Example 2, except that 0.03 g of PTDCP was used instead of TPPN. The resin thus obtained had a YI value of 10.0, an index of refraction (ne) of 1.668, an Abbe number (ve) of 29, heat resistance of 118°C and a resin specific gravity of 1.36.

### [Example 14]

The mixing, polymerization and annealing were performed in the same manner as in Example 1, except that 0.50 g of PTDCP was used instead of TPPN. The resin thus obtained had a YI value of 8.8, an index of refraction (ne) of 1.668, an Abbe number (ve) of 28, heat resistance of 109°C and a resin specific gravity of 1.35.

### [Example 15]

The mixing, polymerization and annealing were performed in the same manner as in Example 2, except that 0.50 g of PTDCP was used instead of TPPN. The resin thus obtained had a YI value of 8.8, an index of refraction (ne) of 1.668, an Abbe number (ve) of 29, heat resistance of 119°C and a resin specific gravity of 1.36.

### [Example 16]

The mixing, polymerization and annealing were performed in the same manner as in Example 1, except that 1 g of PTDCP was used instead of TPPN. The resin thus obtained had a YI value of 9.1, an index of refraction (ne) of 1.667, an Abbe number (ve) of 28, heat resistance of 109°C and a resin specific gravity of 1.35.

### [Example 17]

The mixing, polymerization and annealing were performed in the same manner as in Example 2, except that 1 g of PTDCP was used instead of TPPN. The resin thus obtained had a YI value of 9.5, an index of refraction (ne) of 1.668, an Abbe number (ve) of 29, heat resistance of 115°C and a resin specific gravity of 1.36.

### [Example 18]

The mixing, polymerization and annealing were performed in the same manner as in Example 1, except that 5 g of PTDCP was used instead of TPPN. The resin thus obtained had a YI value of 11.9, an index of refraction (ne) of 1.663, an Abbe number (ve) of 28, heat resistance of 101°C and a resin specific gravity of 1.36.

### [Example 19]

The mixing, polymerization and annealing were performed in the same manner as in Example 2, except that 5 g of PTDCP was used instead of TPPN. The resin thus obtained had a YI value of 11.0, an index of refraction (ne) of 1.663, an Abbe number (ve) of 29, heat resistance of 111°C and a resin specific gravity of 1.37.

### [Example 20]

The mixing, polymerization and annealing were performed in the same manner as in Example 1, except that 0.03 g of triphenyl phosphite (hereinafter, TPP) was used instead of TPPN. The resin thus obtained had a YI value of 11.6, an index of refraction (ne) of 1.668, an Abbe number (ve) of 28, heat resistance of 108°C and a resin specific gravity of 1.35.

### [Example 21]

The mixing, polymerization and annealing were performed in the same manner as in Example 2, except that 0.03 g of TPP was used instead of TPPN. The resin thus obtained had a YI value of 10.4, an index of refraction (ne) of 1.668, an Abbe number (ve) of 29, heat resistance of 118°C and a resin specific gravity of 1.36.

### [Example 22]

The mixing, polymerization and annealing were performed in the same manner as in Example 1, except that 0.5 g of TPP was used instead of TPPN. The resin thus obtained had a YI value of 9.1, an index of refraction (ne) of 1.668, an Abbe number (ve) of 28, heat resistance of 107°C and a resin specific gravity of 1.35.

### [Example 23]

The mixing, polymerization and annealing were performed in the same manner as in Example 2, except that 0.5 g of TPP was used instead of TPPN. The resin thus obtained had a YI value of 8.8, an index of refraction (ne) of 1.668, an Abbe number (ve) of 29, heat resistance of 113°C and a resin specific gravity of 1.36.

### [Example 24]

The mixing, polymerization and annealing were performed in the same manner as in Example 1, except that 1 g of TPP was used instead of TPPN. The resin thus obtained had a YI value of 9.4, an index of refraction (ne) of 1.668, an Abbe number (ve) of 28, heat resistance of 104°C and a resin specific gravity of 1.35.

### [Example 25]

The mixing, polymerization and annealing were performed in the same manner as in Example 2, except that 1 g of TPP was used instead of TPPN. The resin thus obtained had a YI value of 9.1, an index of refraction (ne) of 1.669, an Abbe number (ve) of 29, heat resistance of 111°C and a resin specific gravity of 1.36.

### [Example 26]

The mixing, polymerization and annealing were performed in the same manner as in Example 2, except that 5 g of TPP was used instead of TPPN. The resin thus obtained had a YI value of 11.4, an index of refraction (ne) of 1.667, an Abbe number (ve) of 28, heat resistance of 105°C and a resin specific gravity of 1.35.

### [Example 27]

The mixing, polymerization and annealing were performed in the same manner as in Example 1, except that 0.03 g of triphenyl phosphate (hereinafter, TPPA) was used instead of TPPN. The resin thus obtained had a YI value of 12.1, an index of refraction (ne) of 1.668, an Abbe number (ve) of 28, heat resistance of 115°C and a resin specific gravity of 1.35.

### [Example 28]

The mixing, polymerization and annealing were performed in the same manner as in Example 2, except that 0.03 g of TPPA was used instead of TPPN. The resin thus obtained had a YI value of 10.7, an index of refraction (ne) of 1.668, an Abbe number (ve) of 29, heat resistance of 121°C and a resin specific gravity of 1.36.

### [Example 29]

The mixing, polymerization and annealing were performed in the same manner as in Example 1, except that 0.50 g of TPPA was used instead of TPPN. The resin thus obtained had a YI value of 8.9, an index of refraction (ne) of 1.668, an Abbe number (ve) of 28, heat resistance of 110°C and a resin specific gravity of 1.35.

### [Example 30]

The mixing, polymerization and annealing were performed in the same manner as in Example 2, except that 0.50 g of TPPA was used instead of TPPN. The resin thus obtained had a YI value of 9.1, an index of refraction (ne) of 1.668, an Abbe number (ve) of 28, heat resistance of 119°C and a resin specific gravity of 1.36.

### [Example 31]

The mixing, polymerization and annealing were performed in the same manner as in Example 1, except that 1 g of TPPA was used instead of TPPN. The resin thus obtained had a YI value of 8.9, an index of refraction (ne) of 1.668, an Abbe number (ve) of 28, heat resistance of 110°C and a resin specific gravity of 1.35.

### [Example 32]

The mixing, polymerization and annealing were performed in the same manner as in Example 2, except that 1 g of TPPA was used instead of TPPN. The resin thus obtained had a YI value of 9.0, an index of refraction (ne) of 1.669, an Abbe number (ve) of 29, heat resistance of 119°C and a resin specific gravity of 1.36.

### [Example 33]

The mixing, polymerization and annealing were performed in the same manner as in Example 1, except that 5 g of TPPA was used instead of TPPN. The resin thus obtained had a YI value of 11.2, an index of refraction (ne) of 1.664, an Abbe number (ve) of 28, heat resistance of 97°C and a resin specific gravity of 1.35.

### [Example 34]

The mixing, polymerization and annealing were performed in the same manner as in Example 2, except that 5 g of TPPA was used instead of TPPN. The resin thus obtained had a YI value of 11.4, an index of refraction (ne) of 1.667, an Abbe number (ve) of 28, heat resistance of 105°C and a resin specific gravity of 1.35.

### [Comparative Example 1]

The mixing, polymerization and annealing were performed in the same manner as in Example 1, except that no TPPN was used. The resin thus obtained had a YI value of 12.1, an index of refraction (ne) of 1.669, an Abbe number (ve) of 28, heat resistance of 110°C and a resin specific gravity of 1.35.

### [Comparative Example 2]

The mixing, polymerization and annealing were performed in the same manner as in Example 2, except that no TPPN was used. The resin thus obtained had a YI value of 12.9, an index of refraction (ne) of 1.669, an Abbe number (ve) of 29, heat resistance of 120°C and a resin specific gravity of 1.36.

### [Comparative Example 3]

The mixing, polymerization and annealing were performed in the same manner as in Example 3, except that no TPPN was used. The resin thus obtained had a YI value of 11.0, an index of refraction (ne) of 1.659, an Abbe number (ve) of 27, heat resistance of 138°C and a resin specific gravity of 1.38.

### [Comparative Example 4]

The mixing, polymerization and annealing were performed in the same manner as in Example 4, except that no TPPN was used. The resin thus obtained had a YI value of 9.0, an index of refraction (ne) of 1.674, an Abbe number (ve) of 26, heat resistance of 112°C and a resin specific gravity of 1.33.

### [Comparative Example 5]

The mixing, polymerization and annealing were performed in the same manner as in Example 5, except that no TPPN was used. The resin thus obtained had a YI value of 7.3, an index of refraction (ne) of 1.674, an Abbe number (ve) of 27, heat resistance of 125°C and a resin specific gravity of 1.33.

The results thus obtained are set in Tables 1 and 2. In the Tables, the color value [YI] is an indicator of color improvement by addition of the phosphorus-containing compound. In Examples 1 to 34, resin color can be improved by addition of the phosphorus-containing compound. Meanwhile, in Comparative Examples 1 to 5, the YI value increases and color is unsatisfactory.

**[Table 1]**

| | Aromatic isocyanate (a) (parts by mass) | Mercapto group-containing compound (b) (parts by mass) | Phosphorus-containing compound (c) | Addition amount of phosphorus compound | Color [YI] | Index of refraction [ne] | Abbe number[νe] | Heat resistance[°C] | Specific gravity |
|---|---|---|---|---|---|---|---|---|---|
| Ex.1 | Tolylene diisocyanate (34.65g) hexamethylene diisocyanate (14.34g) | 4-mercaptomethyl-1,8-dimercapto-3,6-dithiaoctane(51.01g) | TPPN | 100 ppm | 9.0 | 1.669 | 28 | 111 | 1.35 |
| Ex.2 | Tolylene diisocyanate (30.68g) hexamethylene diisocyanate (15.95g) | 4,8 or 4,7 or 5,7-dimercaptomethyl-1,11-dimercapto-3,6,9-trithiaundecane (53.37g) | TPPN | 100 ppm | 8.7 | 1.669 | 28 | 121 | 1.36 |
| Ex.3 | Tolylene diisocyanate (44.45g) | Pentaerythritol tetrakismercaptopropionate (22.91g) 4,8 or 4,7 or 5,7-dimercaptomethyl-1,11-dimercapto-3 ,6,9-trithiaundecane (32.64g) | TPPN | 5000 ppm | 5.1 | 1.660 | 27 | 136 | 1.38 |
| Ex.4 | Diphenylmethane diisocyanate (40.56g) hexamethylene diisocyanate (14.68g) | 4-mercaptomethyl-1,8-dimercapto-3,6-dithiaoctane(44.76g) | TPPN | 5000 ppm | 4.8 | 1.674 | 26 | 111 | 1.33 |
| Ex.5 | Diphenylmethane diisocyanate (36.24g) hexamethylene diisocyanate (16.24g) | 4,8 or 4,7 or 5,7-dimercaptomethyl-1,11-dimercapto-3,6,9-trithiaundecane(47.52g) | TPPN | 5000 ppm | 5.1 | 1.672 | 27 | 122 | 1.33 |
| Ex.6 | Tolylene diisocyanate 34.65g) hexamethylene diisocyanate (14.34g) | 4-mercaptomethyl-1,8-dimercapto-3,6-dithiaoctane(51.01g) | TPPN | 10000 ppm | 4.8 | 1.670 | 28 | 111 | 1.35 |
| Ex.7 | Tolylene diisocyanate (30.68g) hexamethylene diisocyanate (15.95g) | 4,8 or 4,7 or 5,7-dimercaptomethyl-1,11-dimercapto-3,6,9-trithia undecane (53.37g) | TPPN | 10000 ppm | 5.3 | 1.668 | 29 | 119 | 1.36 |
| Ex.8 | Tolylene diisocyanate (34.65g) hexamethylene diisocyanate (14.34g) | 4-mercaptomethyl-1,8-dimercapto-3,6-dithiaoctane(51.01g) | TPPN | 20000 ppm | 4.8 | 1.668 | 28 | 109 | 1.35 |
| Ex.9 | Tolylene diisocyanate (30.68g) hexamethylene diisocyanate (15.95g) | 4,8 or 4,7 or 5,7-dimercaptomethyl-1,11-dimercapto-3,6,9-trithiaundecane (53.37g) | TPPN | 20000 ppm | 5.0 | 1.669 | 28 | 120 | 1.35 |
| Ex.10 | Tolylene diisocyanate (34.65g) hexamethylene diisocyanate (14.34g) | 4-mercaptomethyl-1, 8-dimercapto-3,6-dithiaoctane(51.01g) | TPPN | 50000 ppm | 5.4 | 1.669 | 27 | 107 | 1.34 |
| Ex.11 | Tolylene diisocyanate (30.68g) hexamethylene diisocyanate (15.95g) | 4,8 or 4,7 or 5,7-dimercaptomethyl-1,11-dimercapto-3,6,9-trithiaundecane (53.37g) | TPPN | 50000 ppm | 6.0 | 1.670 | 28 | 117 | 1.35 |
| Ex.12 | Tolylene diisocyanate (34.65g) hexamethylene diisocyanate (14.34g) | 4-mercaptomethyl-1,8-dimercapto-3,6-dithiaoctane(51.01g) | PTDCP | 300 ppm | 11.5 | 1.668 | 28 | 109 | 1.35 |
| Ex.13 | Tolylene diisocyanate (30.68g) hexamethylene diisocyanate (15.95g) | 4,8 or 4,7 or 5,7-dimercaptomethyl-1,11-dimercapto-3,6,9-trithiaundecane (53.37g) | PTDCP | 300 ppm | 10.0 | 1.668 | 29 | 118 | 1.36 |
| Ex.14 | Tolylene diisocyanate (34.65g) hexamethylene diisocyanate (14.34g) | 4-mercaptomethyl-1,8-dimercapto-3,6-dithiaoctane(51.01g) | PTDCP | 5000 ppm | 8.8 | 1.668 | 28 | 109 | 1.35 |
| Ex.15 | Tolylene diisocyanate (30.68g) hexamethylene diisocyanate (15.95g) | 4,8 or 4,7 or 5,7-dimercaptomethyl-1,11-dimercapto-3,6,9-trithiaundecane (53.37g) | PTDCP | 5000 ppm | 8.8 | 1.668 | 29 | 119 | 1.36 |
| Ex.16 | Tolylene diisocyanate (34.65g) hexamethylene diisocyanate (14.34g) | 4-mercaptomethyl-1,8-dimercapto-3,6-dithiaoctane(51.01g) | PTDCP | 10000 ppm | 9.1 | 1.667 | 28 | 109 | 1.35 |
| Ex.19 | Tolylene diisocyanate (30.68g) hexamethylene diisocyanate (15.95g) | 4,8 or 4,7 or 5,7-dimercaptomethyl-1,11-dimercapto-3,6,9-trithiaundecane (53.37g) | PTDCP | 50000 ppm | 11.0 | 1.663 | 29 | 111 | 1.37 |

| | | | | | | | | | |
|---|---|---|---|---|---|---|---|---|---|
| 1. TPPN: triphenylphosphine PTDCP: tris(1,3-dichloropropan-2-yl) phosphate TPP: triphenyl phosphite, TPPA: triphenyl phosphate 2. Addition amount of phosphorus compound: addition amount with respect to homogeneous solution | | | | | | | | | |

**[Table 2]**

| | Aromatic isocyanate (a) (parts by mass) | Mercapto group-containing compound (b) (parts by mass) | Phosphorus-containing compound (c) | Addition amount of phosphorus compound | Color [YI] | Index of refraction [ne] | Abbe number [νe] | Heat resistance [°C] | Specific gravity |
|---|---|---|---|---|---|---|---|---|---|
| Ex.20 | Tolylene diisocyanate (34.65g) hexamethylene diisocyanate (14.34g) | 4-mercaptomethyl-1,8-dimercapto-3,6-dithiaoctane(51.01g) | TPP | 300 ppm | 11.6 | 1.668 | 28 | 108 | 1.35 |
| Ex.21 | Tolylene diisocyanate (30.68g) hexamethylene diisocyanate (15.95q) | 4,8 or 4,7 or 5,7-dimercaptomethyl-1,11-dimercapto-3,6,9-trithiaundecane (53.37g) | TPP | 300 ppm | 10.4 | 1.668 | 29 | 118 | 1.36 |
| Ex.22 | Tolylene diisocyanate (34.65g) hexamethylene diisocyanate (14.34g) | 4-mercaptomethyl-1,8-dimercapto-3,6-dithiaoctane(51.01g) | TPP | 5000 ppm | 9.1 | 1.668 | 28 | 107 | 1.35 |
| Ex.23 | Tolylene diisocyanate (30.68g) hexamethylene diisocyanate (15.95g) | 4,8 or 4,7 or 5,7-dimercaptomethyl-1,11-dimercapto-3,6,9-trithiaundecane (53.37g) | TPP | 5000 ppm | 8.8 | 1.668 | 29 | 113 | 1.36 |
| Ex.24 | Tolylene Diisocyanate (34.65g) hexamethylene diisocyanate (14.34g) | 4-mercaptomethyl-1,8-dimercapto-3,6-dithiaoctane(51.01g) | TPP | 10000 ppm | 9.4 | 1.668 | 28 | 104 | 1.35 |
| Ex.25 | Tolylene diisocyanate (30.68g) hexamethylene diisocyanate (15.95g) | 4,8 or 4,7 or 5,7-dimercaptomethyl-1,11-dimercapto-3,6,9-trithiaundecane (53.37g) | TPP | 10000 ppm | 9.1 | 1.669 | 29 | 111 | 1.36 |
| Ex.26 | Tolylene diisocyanate (30.68g) hexamethylene diisocyanate (15.95g) | 4,8 or 4,7 or 5,7-dimercaptomethyl-1,11-dimercapto-3,6,9-trithiaundecane (53.37g) | TPP | 50000 ppm | 11.4 | 1.667 | 28 | 105 | 1.35 |
| Ex.27 | Tolylene diisocyanate (34.65g) hexamethylene diisocyanate (14.34g) | 4-mercaptomethyl-1,8-dimercapto-3,6-dithiaoctane(51.01g) | TPPA | 300 ppm | 12.1 | 1.668 | 28 | 115 | 1.35 |
| Ex.28 | Tolylene diisocyanate (30.68g) hexamethylene diisocyanate (15.95g) | 4,8 or 4,7 or 5,7-dimercaptomethyl-1,11-dimercapto-3,6,9-trithiaundecane (53.37g) | TPPA | 300 ppm | 10.7 | 1.668 | 29 | 121 | 1.36 |
| Ex.29 | Tolylene diisocyanate (39.65g) hexamethylene diisocyanate (14.34g) | 4-mercaptomethyl-1,8-dimercapto-3,6-dithiaoctane(51.01g) | TPPA | 5000 ppm | 8.9 | 1.668 | 28 | 110 | 1.35 |
| Ex.30 | Tolylene diisocyanate (30.68g) hexamethylene diisocyanate (15.95g) | 4,8 or 4,7 or 5,7-dimercaptomethyl-1,11-dimercapto-3,6,9-trithiaundecane (53.37g) | TPPA | 5000 ppm | 9.1 | 1.668 | 28 | 119 | 1.36 |
| Ex.31 | Tolylene diisocyanate (34.65g) hexamethylene diisocyanate (14.34) | 4-mercaptomethyl-1,8-dimercapto-3,6-dithiaoctane(51.01g) | TPPA | 10000 ppm | 8.9 | 1.668 | 28 | 110 | 1.35 |
| Ex.32 | tolylene diisocyanate (30.68g) hexamethylene diisocyanate (15.95g) | 4,8 or 4,7 or 5,7-dimercaptomethyl-1,11-dimercapto-3,6,9-trithiaundecane (53.37g) | TPPA | 10000 ppm | 9.0 | 1.669 | 29 | 119 | 1.36 |
| Ex.33 | Tolylene diisocyanate (34.65g) hexamethylene diisocyanate (14.34g) | 4-mercaptomethyl-1,8-dimercapto-3,6-dithiaoctane(51.01g) | TPPA | 50000 ppm | 11.2 | 1.664 | 28 | 97 | 1.35 |
| Ex.34 | Tolylene diisocyanate (30.68g) hexamethylene diisocyanate (15.95g) | 4,8 or 4,7 or 5,7-dimercaptomethyl-1,11-dimercapto-3,6,9-trithiaundecane (53.37g) | TPPA | 50000 ppm | 11.4 | 1.667 | 28 | 105 | 1.35 |
| Comp. Ex.1 | Tolylene diisocyanate (34.65g) hexamethylene diisocyanate (14.34g) | 4-mercaptomethyl-1,8-dimercapto-3,6-dithiaoctane (51.01g) | Not added | 0 ppm | 12.1 | 1.669 | 28 | 110 | 1.35 |
| Comp. Ex.2 | Tolylene diisocyanate (30.68g) hexamethylene diisocyanate (15.95g) | 4,8 or 4,7 or 5,7-dimercaptomethyl-1,11-dimercapto-3,6,9-trithiaundecane (53.37g) | Not added | 0 ppm | 12.9 | 1.669 | 29 | 120 | 1.36 |
| Camp. Ex.3 | Tolylene diisocyanate (44.45g) | pentaerythritoltetra kismercaptopropionat e (22.91g) 4,8 or 4,7 or 5,7-dimercaptomethyl-1,11-dimercapto-3,6,9-trithiaundecane (32.64g) | Not added | 0 ppm | 11.0 | 1.659 | 27 | 138 | 1.38 |
| Comp. Ex.4 | Diphenylmethane diisocyanate (40.56g) hexamethylene diisocyanate (14.68q) | 4-mercaptomethyl-1,8-dimercapto-3,6-dithiaoctane (44.76g) | Not added | 0 ppm | 9.0 | 1.674 | 26 | 112 | 1.33 |
| Comp. Ex. 5 | Diphenylmethane diisocyanate (36.24g) hexamethylene diisocyanate (16.24g) | 4,8 or 4,7 or 5,7-dimercaptomethyl-1,11-dimercapto-3,6,9-trithiaundecane (47.52g) | Not added | 0 ppm | 7.3 | 1.674 | 27 | 125 | 1.33 |

| | | | | | | | | | |
|---|---|---|---|---|---|---|---|---|---|
| *1. TPPN: triphenylphosphine, PTDCP: tris(1,3-dichloropropan-2-yl)phosphate TPP: triphenyl phosphite, TPPA: triphenyl phosphate 2. Addition amount of phosphorus compound: addition amount with respect to homogeneous solution | | | | | | | | | |

### [Preparative Example 1]

In accordance with the method as described in Preparative Example 2 of Japanese Laid-open Patent Publication No. 2004-2820, a polythiol compound A containing 1,1,3,3-tetrakis (mercaptomethylthio) propane as a main component was synthesized.

Into a 2-liter bottomless cocked flask equipped with a stirring blade, a thermometer, a distillation column, and a capillary for introducing nitrogen were added 164.2 g (1 mol) of 1,1,3,3-tetramethoxypropane, 488.8 g (4 mol) of acetylthiomethyl thiol, and 7.6 g (0.04 mol) of paratoluenesulfonic acid, followed by stirring and heating at 40°C, while maintaining the vacuum at 1 kPa or less. Heating was continued for about 18 hours until the distillation of methanol was stopped. After cooling, the vacuum was released, and a condenser was equipped instead of a distillation column. Then, 400 ml of methanol, 400 ml of chloroform and 200 ml of 36% hydrochloric acid were added thereto, followed by heating at 60°C to carry out alcoholysis to synthesize a polythiol compound A containing a target compound, 1,1,3,3-tetrakis(mercaptomethylthio)propane, as a main component.

Suitable amounts of water and chloroform were added thereto for separation, and the chloroform layer was washed several times with water. After chloroform and low-boiling point fractions were isolated by removing the solvent, the residue was filtered through a 3 µm TEFLON (registered trademark) filter to obtain 340.0 g of the polythiol compound A. Two components of the polythiol compound were detected (the area ratios from the chromatogram were 9.8% and 9.8%, respectively) through LC analysis of the polythiol compound A. These components were purified by preparative LC and analyzed. These components were 4,6-bis(mercaptomethylthio)-1,3-dithiane and 2-(2,2-bis(mercaptomethylthio)ethyl)-1,3-dithietane, respectively. The analysis results are shown below.

Further, the SHV of the polythiol compound A (including two components as the side-products as described above) were measured by the following method. To a solution of 95.1 mg of the polythiol compound A in a mixed solvent of 30 ml of chloroform and 30 ml of methanol was slowly added dropwise 0.05 mol/L of an iodine solution. When 9.7 ml of the solution was added dropwise thereto, the brown color of the dropwise added iodine did not disappear, and taking this point as an equivalent point, the amount of the SH groups contained in the polythiol compound A was calculated, and found to be 9.64 meq/g.
i) 1,1,3,3-tetrakis(mercaptomethylthio)propane
   ¹H-NMR δ(CDCl₃) : 2.18(t,4 H), 2.49(t, 2H), 3.78-3.90(m, 8 H), 4.64(t, 2H)
   ¹³C-NMR δ(CDCl₃) : 26.7, 41.3,48.7
   FT-IR: 538 cm⁻¹
   MS: m/z=356 (M⁺)
ii) 4,6-bis(mercaptomethylthio)-1,3-dithiane
   ¹H-NMR δ(CDCl₃): 2.02(t, 2H), 2.56(t, 2H), 3.77-3.91(m, 8 H), 3.97(s, 2H), 4.66(t, 2H)
   ¹³C-NMR δ(CDCl₃) : 27.1, 28.8, 38.1,44.6
   FT-IR: 2538 cm⁻¹
   MS: m/z=276 (M⁺)
iii) 2-(2,2-bis(mercaptomethylthio)ethyl)-1,3-dithietane
   ¹H-NMR δ (CDCl₃) : 2.03(t, 2H), 2.13-2.21(m, 1H), 2.75-2.80(m, 1H), 3.79-3.84(m, 1H), 3.90-3.96(m, 3 H), 4.32-4.35(m, 2H)
   ¹³C-NMR δ(CDCl₃) : 27.2, 32.3,38.9, 46.2
   FT-IR: 2538cm⁻¹
   MS: m/z=276(M⁺)

### [Example 35]

0.01 g of dimethyltin dichloride as a curing catalyst, 0.05 g of Viosorb 583 as an ultraviolet absorbent, and 0.05 g of Zelec UN (acid phosphate ester) as an internal mold release agent were added to 45.2 g of m-phenylene diisocyanate, followed by mixing and dissolving at 20°C. Further, 0.50 g of TPPN as a phosphorous-containing compound was added to the mixed solution, followed by mixing and dissolving at 20°C. After the dissolution, 52.9 g of 4-mercaptomethyl-1,8-dimercapto-3,6-dithiaoctane was added thereto, mixed and dissolved to make the mixed solution homogeneous. The homogeneous solution was defoamed at 600 Pa for one hour, filtered through a 1 µm TEFLON filter (TEFLON: registered trademark) and injected into a mold consisting of a glass mold and a tape, the mold was placed in an oven and the temperature was slowly elevated from 25°C to 120°C over 24 hours to perform polymerization. After completion of the polymerization, the mold was taken out from the oven and a molded product was released from the mold. The molded product was annealed at 120°C for 4 hours. The molded product thus obtained had a YI value of 4.0, an index of refraction (ne) of 1.711, an Abbe number (ve) of 24, a heat resistance of 136°C and a specific gravity of 1.42.

### [Comparative Example 6]

The mixing, polymerization and annealing were performed in the same manner as in Example 35, except that no TPPN as a phosphorous-containing compound was used. The resin thus obtained had a YI value of 10.4, an index of refraction (ne) of 1.712, an Abbe number (ve) of 24, heat resistance of 140°C and a resin specific gravity of 1.42.

### [Example 36]

35.2 g of tolylene diisocyanate and 18.3 g of hexamethylene diisocyanate were mixed and dissolved, 0.010 g of dimethyltin dichloride as a curing catalyst, 0.05 g of Viosorb 583 as an ultraviolet absorbent, and 0.10 g of Zelec UN (acid phosphate ester) as an internal mold release agent were added thereto, followed by mixing and dissolving at 20°C. Further, 0.50 g of PTDCP as a phosphorous-containing compound were added to the mixed solution, followed by mixing and dissolving at 20°C. After the dissolution, 14.6 g of 2-mercaptoethanol and 31.9 g of pentaerythritol tetrakismercaptopropionate were added thereto, mixed and dissolved to make the mixed solution homogeneous. The homogeneous solution was defoamed at 600 Pa for one hour, filtered through a 1 µm TEFLON filter (TEFLON: registered trademark) and injected into a mold consisting of a glass mold and a tape, the mold was placed in an oven, and the temperature was slowly elevated from 25°C to 120°C over 24 hours to perform polymerization. After completion of the polymerization, the mold was taken out from the oven and a molded product was released from the mold. The molded product was annealed at 120°C for 4 hours. The molded product thus obtained had a YI value of 4.5, an index of refraction (ne) of 1.600, an Abbe number (ve) of 31, a heat resistance of 106°C and a specific gravity of 1.33.

### [Comparative Example 7]

The mixing, polymerization and annealing were performed in the same manner as in Example 36, except that no PTDCP as a phosphorous-containing compound was used. The resin thus obtained had a YI value of 4.7, an index of refraction (ne) of 1.601, an Abbe number (ve) of 31, heat resistance of 106°C and a resin specific gravity of 1.33.

### [Example 37]

31.8 g of m-phenylene diisocyanate and 6.0 g of m-xylylene diisocyanate were mixed and dissolved, 0.020 g of dimethyltin dichloride as a curing catalyst, 1.00 g of Viosorb 583 as an ultraviolet absorbent, and 0.06 g of Zelec UN (acid phosphate ester) as an internal mold release agent were added thereto, followed by mixing and dissolving at 20°C. Further, 0.50 g of TPPA as a phosphorous-containing compound were added to the mixed solution, followed by mixing and dissolving at 20°C. After the dissolution, 62.2 g of polythiol obtained in Preparative Example 1 was added thereto, mixed and dissolved to make the mixed solution homogeneous (the molar ratio of the mercapto groups to the isocyanato groups in the monomer mixture, SH/NCO=1.3). The homogeneous solution was defoamed at 600 Pa for one hour, filtered through a 1 µm TEFLON filter (TEFLON: registered trademark) and injected into a mold consisting of a glass mold and a tape, the mold was placed in an oven and the temperature was slowly elevated from 25°C to 120°C over 24 hours to perform polymerization. After completion of the polymerization, the mold was taken out from the oven and a molded product was released from the mold. The molded product was annealed at 120°C for 4 hours. The molded product thus obtained had a YI value of 12.8, an index of refraction (ne) of 1.731, an Abbe number (ve) of 24, a heat resistance of 109°C and a specific gravity of 1.48.

### [Example 38]

31.8 g of m-phenylene diisocyanate and 6.0 g of m-xylylene diisocyanate were mixed and dissolved, 0.020 g of dimethyltin dichloride as a curing catalyst, 1.00 g of Viosorb 583 as an ultraviolet absorbent, and 0.06 g of Zelec UN (acid phosphate ester) as an internal mold release agent were added thereto, followed by mixing and dissolving at 20°C. Further, 0.50 g of PTDCP as a phosphorous-containing compound were added to the mixed solution, followed by mixing and dissolving at 20°C. After the dissolution, 62.2 g of polythiol obtained in Preparative Example 1 was added thereto, mixed and dissolved to make the mixed solution homogeneous (the molar ratio of the mercapto groups to the isocyanato groups in the monomer mixture, SH/NCO=1. 3). The homogeneous solution was defoamed at 600 Pa for one hour, filtered through a 1 µm TEFLON filter (TEFLON: registered trademark) and injected into a mold consisting of a glass mold and a tape, the mold was placed in an oven and the temperature was slowly elevated from 25°C to 120°C over 24 hours to perform polymerization. After completion of the polymerization, the mold was taken out from the oven and a molded product was released from the mold. The molded product was annealed at 120°C for 4 hours. The molded product thus obtained had a YI value of 12.9, an index of refraction (ne) of 1.736, an Abbe number (ve) of 24, a heat resistance of 110°C and a specific gravity of 1.48.

### [Comparative Example 8]

The mixing, polymerization and annealing were performed in the same manner as in Example 37, except that no phosphorous-containing compound was used. The resin thus obtained had a YI value of 14.2, an index of refraction (ne) of 1.735, an Abbe number (ve) of 24, heat resistance of 108°C and a resin specific gravity of 1.48.

**[Table 3]**

| | Aromatic isocyanate (a) (parts by mass) | Mercapto group-containing compound (b) (parts by mass) | Phosphorus-containing compound (c) | Addition amount of Phosphorus compound | Color [YI] | Index of refraction [ne] | Abbe number [νe] | Heat resistance [°C] | Specific gravity |
|---|---|---|---|---|---|---|---|---|---|
| Ex. 35 | m-phenylene diisocyanate (47.1) | m-phenylene diisocyanate (47.1)/4-mercaptomethyl-1,8-dimercapto-3,6-dithiaoctane(52.9) | TPPN | 5000ppm | 4.0 | 1.711 | 24 | 136 | 1.42 |
| Comp. Ex. 6 | m-phenylene diisocyanate (47.1) | m-phenylene diisocyanate (47.1)/9-mercaptomethyl-1,8-dimercapto-3,6-dithiaoctane (52.9) | - | - | 10.4 | 1.712 | 24 | 140 | 1.42 |
| Ex. 36 | Tolylene diisocyanate (35.2)/1,6-hexa methylene diisocyanate (18.3) | 2-mercaptoethanol (14.6)/pentaerythritol tetrakismercaptopropionate (31.9) | PTDCP | 5000ppm | 4.5 | 1.600 | 31 | 106 | 1.33 |
| Comp. Ex. 7 | Tolylene diisocyanate (35.2)/1,6-hexa methylene diisocyanate (18.3) | 2-mercaptoethanol (14.6)/pentaerythritol tetrakismercaptopropionate (31.9) | - | - | 4.7 | 1.601 | 31 | 106 | 1.33 |
| Ex. 37 | m-phenylene diisocyanate (31.8)/m-xylylene diisocyanate (6.0) | Compound of Prep. Ex. 1 (62.2) | TPPA | 5000ppm | 12.8 | 1.731 | 24 | 109 | 1.48 |
| Ex. 38 | m-phenylene diisocyanate (31.8)/m-xylylene diisocyanate (6.0) | Compound of Prep. Ex. 1 (62.2) | PTDCP | 5000ppm | 12.9 | 1.736 | 24 | 110 | 1.48 |
| Comp. Ex. 8 | m-phenylene diisocyanate (31.8)/m-xylylene diisocyanate (6.0) | Compound of Prep. Ex. 1 (62.2) | - | - | 14.2 | 1.735 | 24 | 108 | 1.48 |

| | | | | | | | | | |
|---|---|---|---|---|---|---|---|---|---|
| *1. TPPN: triphenylphosphine, PTDCP: tris(1,3-dichloropropan-2-yl)phosphate, TPPA: triphenyl phosphate 2. Addition amount of phosphorus compound: addition amount with respect to homogeneous solution | | | | | | | | | |

## Claims

1. A polymerizable composition for optical materials comprising:
(a) an aromatic isocyanate selected from tolylene diisocyanate, 4,4'-diphenylmethane diisocyanate, and phenylene diisocyanate;
(b) a mercapto group-containing compound; and
(c) a phosphorus-containing compound selected from triphenylphosphine, tris(1,3-dichloropropan-2-yl)phosphate, triphenyl phosphite, and triphenyl phosphate.

2. The composition according to claim 1, wherein the mercapto group-containing compound (b) is a polythiol compound (b1) and/or a (poly)hydroxy(poly)mercapto compound (b2).

3. The composition according to claim 2, wherein the polythiol compound (b1) is at least one selected from the group consisting of 4-mercaptomethyl-1,8-dimercapto-3,6-dithiaoctane, 4,8- or 4,7- or 5,7-dimercaptomethyl-1,11-dimercapto-3,6,9-trithia undecane, pentaerythritol tetrakismercaptoacetate, pentaerythritol tetrakismercaptopropionate, 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane and 3-mercaptomethyl-1,5-dimercapto-2,4-dithiapentane.

4. The composition according to claim 2 or 3, wherein the (poly)hydroxy(poly)mercapto compound (b2) is at least one selected from the group consisting of 2-mercapto ethanol, 3-mercapto-1,2-propanedithiol, 1,3-dimercapto-2-propanol, 2,3-dimercapto-1-propanol, 1,2-dimercapto-1,3-butanediol, pentaerythritol mono(3-mercaptopropionate), pentaerythritol bis(3-mercaptopropionate), pentaerythritol tris(3-mercaptopropionate), pentaerythritol tris(thioglycolate) and glycerine bis(mercaptoacetate), 4-mercaptophenol and 2,4-dimercaptophenol.

5. The composition according to any one of claims 1 to 4, wherein the triphenylphosphine is contained in an amount of 1 × 10² ppm or more.

6. The composition according to claim 1, wherein the triphenylphosphine is contained in an amount of 1 × 10² ppm to 5 × 10⁴ ppm.

7. The composition according to claim 1, wherein at least one from the group consisting of tris(I,3-dichloropropan-2-yl)phosphate, triphenyl phosphite and triphenyl phosphate is contained in an amount of 1 × 10² ppm or more.

8. A resin for optical materials obtained by polymerizing the polymerizable composition for optical materials according to any one of claims 1 to 7.

9. An optical transparent member comprising the resin for optical materials according to claim 8.

10. An optical material comprising the optical transparent member according to claim 9.

11. A method for manufacturing an optical material, comprising curing the polymerizable composition for optical materials according to any one of claims 1 to 7.

12. The method according to claim 11, wherein the polymerizable composition for optical materials is molded by cast polymerization.

## Patentansprüche

1. Polymerisierbare Zusammensetzung für optische Materialien, die Folgendes umfasst:
(a) ein aromatisches Isocyanat ausgewählt aus Tolylendiisocyanat, 4,4'-Diphenylmethandiisocyanat und Phenylendiisocyanat;
(b) eine Mercaptogruppen-hältige Verbindung und
(c) eine phosphorhältige Verbindung ausgewählt aus Triphenylphosphin, Tris-(1,3-dichlorpropan-2-yl)phosphat, Triphenylphosphit und Triphenylphosphat.

2. Zusammensetzung nach Anspruch 1, wobei die Mercaptogruppen-hältige Verbindung (b) eine Polythiolverbindung (b1) und/oder eine (Poly)hydroxy(poly)mercaptoverbindung (b2) ist.

3. Zusammensetzung nach Anspruch 2, wobei die Polythiolverbindung (b1) zumindest eine, ausgewählt aus der aus folgenden bestehenden Gruppe ist: 4-Mercaptomethyl-1,8-dimercapto-3,6-dithiaoctan, 4,8- oder 4,7- oder 5,7-Dimercaptomethyl-1,11-dimercapto-3,6,9-trithiaundecan, Pentaerythrittetrakismercaptoacetat, Pentaerythrittetrakismercaptopropionat, 2,5-Bis(mercaptomethyl)-1,4-dithian, Bis(mercaptoethyl)sulfid, 1,1,3,3-Tetrakis(mercaptomethylthio)propan, 4,6-Bis(mercaptomethylthio)-1,3-dithian, 2-(2,2-Bis(mercaptomethylthio)ethyl)-1,3-dithietan, 1,1,2,2-Tetrakis-(mercaptomethylthio)ethan und 3-Mercaptomethyl-1,5-dimercapto-2,4-dithiapentan.

4. Zusammensetzung nach Anspruch 2, wobei die (Poly)hydroxy(poly)mercapto-verbindung (b2) zumindest eine, ausgewählt aus der aus folgenden bestehenden Gruppe ist: 2-Mercaptoethanol, 3-Mercapto-1,2-propanedithiol, 1,3-Dimercapto-2-propanol, 2,3-Dimercapto-1-propanol, 1,2-Dimercapto-1,3-butandiol, Pentaerythrit-mono(3-mercaptopropionat), Pentaerythrit-bis(3-mercaptopropionat), Pentaerythrit-tris(3-mercaptopropionat), Pentaerythrit-tris(thioglykolat) und Glycerin-bis(mercapto-acetat), 4-Mercaptophenol und 2,4-Dimercaptophenol.

5. Zusammensetzung nach einem der Ansprüche 1 bis 4, wobei das Triphenylphosphin in einer Menge von 1 x 10² ppm oder mehr enthalten ist.

6. Zusammensetzung nach Anspruch 1, wobei das Triphenylphosphin in einer Menge von 1 x 10² ppm bis 5 x 10⁴ ppm enthalten ist.

7. Zusammensetzung nach Anspruch 1, wobei zumindest eine Verbindung aus der Gruppe, bestehend aus Tris(1,3-dichlorpropan-2-yl)phosphat, Triphenylphosphit und Triphenylphosphat in einer Menge von 1 x 10² ppm oder mehr enthalten ist.

8. Harz für optische Materialien, erhalten durch Polymerisieren einer polymerisierbaren Zusammensetzung für optische Materialien nach einem der Ansprüche 1 bis 7.

9. Optisches transparentes Element, das ein Harz für optische Materialien nach Anspruch 8 umfasst.

10. Optisches Material, das ein optisches transparentes Element nach Anspruch 9 umfasst.

11. Verfahren zur Herstellung eines optischen Materials, umfassend das Härten einer polymerisierbaren Zusammensetzung für optische Materialien nach einem der Ansprüche 1 bis 7.

12. Verfahren nach Anspruch 11, wobei die polymerisierbare Zusammensetzung für optische Materialien durch Gusspolymerisation geformt wird.

## Revendications

1. Composition polymérisable pour matériaux optiques comprenant :
(a) un isocyanate aromatique choisi parmi le diisocyanate de tolylène, le diisocyanate de 4,4'-diphénylméthane, et le diisocyanate de phénylène ;
(b) un composé contenant un groupe mercapto ; et
(c) un composé contenant du phosphore choisi parmi la triphénylphosphine, le phosphate de tris(1,3-dichloropropan-2-yle), le phosphite de triphényle, et le phosphate de triphényle.

2. Composition selon la revendication 1, dans laquelle le composé contenant un groupe mercapto (b) est un composé polythiol (b1) et/ou un composé (poly)hydroxy(poly)mercapto (b2).

3. Composition selon la revendication 2, dans laquelle le composé polythiol (b1) est au moins l'un choisi dans l'ensemble constitué par le 4-mercaptométhyl-1,8-dimercapto-3,6-dithiaoctane, le 4,8- ou 4,7- ou 5,7-dimercaptométhyl-1,11-dimercapto-3,6,9-trithiaundécane, le tétrakismercaptoacétate de pentaérythritol, le tétrakismercaptopropionate de pentaérythritol, le 2,5-bis(mercaptométhyl)-1,4-dithiane, le sulfure de bis(mercaptoéthyle), le 1,1,3,3-tétrakis(mercaptométhylthio)propane, le 4,6-bis(mercaptométhylthio)1,3-dithiane, le 2-(2,2-bis(mercaptométhylthio)éthyl)-1,3-dithiétane, le 1,1,2,2-tétrakis(mercaptométhylthio)éthane et le 3-mercaptométhyl-1,5-dimercapto-2,4-dithiapentane.

4. Composition selon la revendication 2 ou 3, dans laquelle le composé (poly)hydroxy(poly)mercapto (b2) est au moins l'un choisi dans l'ensemble constitué par le 2-mercaptoéthanol, le 3-mercapto-1,2-propanedithiol, le 1,3-dimercapto-2-propanol, le 2,3-dimercapto-1-propanol, le 1,2-dimercapto-1,3-butanediol, le mono(3-mercaptopropionate) de pentaérythritol, le bis(3-mercaptopropionate) de pentaérythritol, le tris(3-mercaptopropionate) de pentaérythritol, le tris(thioglycolate) de pentaérythritol, le bis(mercaptoacétate) de glycérol, le 4-mercaptophénol et le 2,4-dimercaptophénol.

5. Composition selon l'une quelconque des revendications 1 à 4, dans laquelle la triphénylphosphine est contenue en une quantité de 1 x 10² ppm ou plus.

6. Composition selon la revendication 1, dans laquelle la triphénylphosphine est contenue en une quantité de 1 x 10² ppm à 5 x 10⁴ ppm.

7. Composition selon la revendication 1, dans laquelle au moins l'un de l'ensemble constitué par le phosphate de tris(1,3-dichloropropan-2-yle), le phosphite de triphényle et le phosphate de triphényle est contenu en une quantité de 1 x 10² ppm ou plus.

8. Résine pour matériaux optiques obtenue par polymérisation de la composition polymérisable pour matériaux optiques selon l'une quelconque des revendications 1 à 7.

9. Elément transparent optique comprenant la résine pour matériaux optiques selon la revendication 8.

10. Matériau optique comprenant l'élément transparent optique selon la revendication 9.

11. Procédé pour fabriquer un matériau optique, comprenant le durcissement de la composition polymérisable pour matériaux optiques selon l'une quelconque des revendications 1 à 7.

12. Procédé selon la revendication 11, dans lequel la composition polymérisable pour matériaux optiques est moulée par polymérisation par coulée.
